# EUROPEAN PATENT APPLICATION

(11) **EP 4 144 545 A1**
(43) Date of publication of application: **08.03.2023**
(21) Application number: 21855787.4
(22) Date of filing: 05.03.2021
(51) Int. Cl.: B60C 29/02

(54) **DIVIDING WALL MOUNTING DEVICE**

(30) Priority: 11.08.2020 JP 2020135521
(71) Applicant: Pacific Industrial Co., Ltd., Ogaki-shi, Gifu 503-8603 (JP)
(72) Inventor: SUNAYAMA Yuki, Ogaki-shi, Gifu 503-8603 (JP)
(74) Representative: Kramer Barske Schmidtchen Patentanwälte PartG mbB
(86) International application number: PCT/JP2021/008648
(87) International publication number: WO 2022/034708

(57) **Abstract**

[Problem] To provide a dividing wall mounting device that can be attached to a dividing wall from the outside. [Solution] A dividing wall mounting device 10A of the present invention includes a flexible flange 22 made of an elastomer and protruding laterally from a main device body 11 extending along a central axis of a through-hole 91. When the dividing wall mounting device 10A is inserted into the through-hole 91 from one end side in the axial direction, the flexible flange 22 passes through the through-hole 91 in a first state where the flexible flange 22 collapses towards an other end side in the axial direction and narrows due to contact with an opening edge of the through-hole 91. On the other hand, when the dividing wall mounting device 10A is pulled back in a direction opposite to the insertion, the flexible flange 22 is press-fitted into the through-hole 91 in a second state where the flexible flange 22 collapses towards the one end side in the axial direction and narrows due to contact with the opening edge of the through-hole 91, and has an outer diameter larger than the outer diameter in the first state.

## Description

### TECHNICAL FIELD

The present disclosure relates to a dividing wall mounting device attached to a through-hole of a dividing wall that separates an inner region from the outside.

### BACKGROUND ART

As this type of dividing wall mounting device, for example, a dividing wall mounting device that is press-fitted into a through-hole of a rim of a wheel corresponding to a dividing wall, such as a snap-in type tire valve, is known (see, for example, Patent Document 1).

### RELATED ART DOCUMENTS

### PATENT DOCUMENT

Patent Document 1: JP 2012-91568 A (Fig. 2)

### SUMMARY OF THE INVENTION

### PROBLEMs TO BE SOLVED BY THE INVENTION

However, the conventional dividing wall mounting device needs to be press-fitted into the through-hole from an inner side that is a high pressure side with respect to the dividing wall, and it takes time and effort to attach the dividing wall mounting device. Specifically, for example, since the above-described tire valve needs to be press-fitted into the through-hole from the inner region side of the tire, which is the high pressure side with respect to the rim serving as the dividing wall, there is a problem in that it takes time and effort to remove the tire from the wheel whenever replacing the tire valve. For this problem, there is a demand for development of a dividing wall mounting device that can be attached to the dividing wall from the outside.

### MEANS OF SOLVING THE PROBLEM

A dividing wall mounting device of the present disclosure made to solve the above problem is a dividing wall mounting device configured to be attached to a through-hole of a dividing wall that separates, from an outside, an inner region in which a fluid is stored or flows, the dividing wall mounting device including: a main device body extending along a central axis of the through-hole; and a flexible flange made of an elastomer and protruding laterally from an intermediate position in an axial direction of the main device body, and when the dividing wall mounting device is inserted into the through-hole from one end side in the axial direction, the flexible flange passing through the through-hole in a first state where the flexible flange collapses towards an other end side in the axial direction and narrows due to contact with an opening edge of the through-hole, and when the dividing wall mounting device is pulled back in a direction opposite to the insertion, the flexible flange being press-fitted into the through-hole in a second state where the flexible flange collapses towards the one end side in the axial direction and narrows due to contact with the opening edge of the through-hole, and has an outer diameter larger than an outer diameter in the first state.

### BRIEF DESCRIPTION OF THE DRAWINGS

Fig. 1 is a cross-sectional side view of a dividing wall mounting device according to a first embodiment.
Fig. 2 is a perspective view of the dividing wall mounting device.
Fig. 3 is a cross-sectional side view of the dividing wall mounting device when pushed into a through-hole.
Fig. 4 is a cross-sectional side view of the dividing wall mounting device in a state where a seal protrusion passes through the through-hole.
Fig. 5 is a cross-sectional side view of the dividing wall mounting device in a state where a flexible flange is press-fitted into a through-hole.
Fig. 6 is a cross-sectional side view of the dividing wall mounting device in a state where a stopper is attached.
Fig. 7 is a cross-sectional side view of a dividing wall mounting device according to a second embodiment.
Fig. 8 is a cross-sectional side view of the dividing wall mounting device in a state where a flexible flange is press-fitted into a through-hole.

### MODE FOR CARRYING OUT THE INVENTION

### [First embodiment]

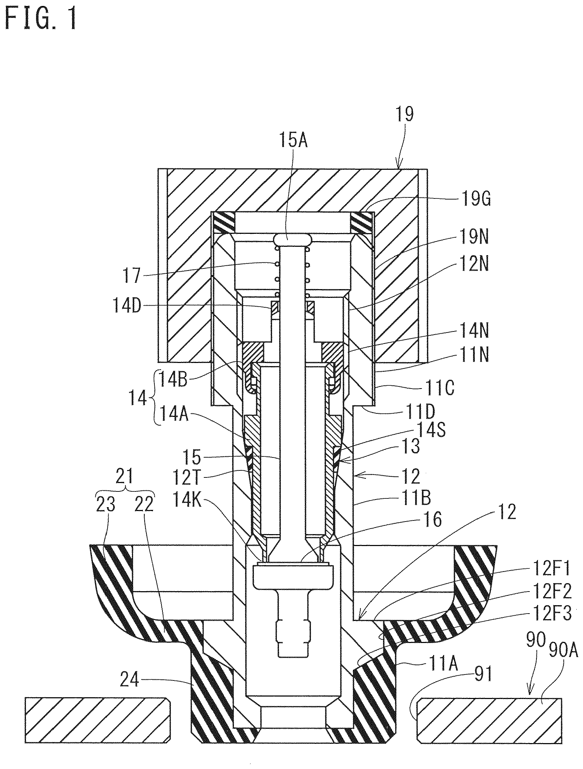

Hereinafter, a dividing wall mounting device 10A according to a first embodiment of the present disclosure will be described with reference to Figs. 1 to 6. The dividing wall mounting device 10A of the present embodiment illustrated in Fig. 1 is a tire valve, and includes a valve core 13 inside a main device body 11 extending in the vertical direction in Fig. 1.

In the following description, the vertical direction in Fig. 1, which is also an axial direction of the main device body 11, will be simply referred to as the vertical direction, "lower side", "lower end side", and the like in Fig. 1 of each portion of the dividing wall mounting device 10A will be simply referred to as "lower side", "lower end side", and the like, and the opposite side will be simply referred to as "upper side", "upper end side", and the like. Note that the lower end side of the main device body 11 corresponds to "one end side in an axial direction" described in the claims, and the upper end side of the main device body 11 corresponds to "other end side in the axial direction" described in the claims.

The above-described valve core 13 has a structure in which a shaft 15 extending in the vertical direction is supported by a core sleeve 14. The core sleeve 14 is formed by rotatably coupling a short sleeve 14B to an upper end portion of a long sleeve 14A. In the short sleeve 14B, a bridge 14D is formed so as to straddle an upper surface opening of an inner space, and a position near an upper end of the shaft 15 passes through a through-hole formed in the bridge 14D. A compression coil spring 17 is attached between an upper end protrusion 15A formed by caulking the upper end of the shaft 15 and the bridge 14D. A valve body 16 protrudes from a position near a lower end of the shaft 15, and the valve body 16 is pressed against a valve port 14K at a lower end of the core sleeve 14 by the resilient force of the compression coil spring 17. Furthermore, a thread portion 14N is formed on a side surface of the short sleeve 14B.

The main device body 11 includes a metal support sleeve 12 that houses the valve core 13. The support sleeve 12 has a cylindrical shape as a whole, and the valve core 13 is inserted into the support sleeve 12, and the thread portion 14N of the core sleeve 14 is fastened by a thread portion 12N formed at a position near an upper end of an inner surface of the support sleeve 12. In addition, a tapered portion 12T whose inner diameter decreases downward is provided at an intermediate position in the support sleeve 12, and a seal ring 14S attached to an outer surface of the long sleeve 14A is pressed thereto. Normally, passage of a fluid through the support sleeve 12 is restricted by the valve core 13. When the shaft 15 is pushed downward against the resilient force of the compression coil spring 17, the valve port 14K is opened, and the fluid passes through the support sleeve 12.

An upper end portion on the outer surface side of the support sleeve 12 is enlarged in diameter in a stepped manner to form an upper end side large diameter portion 11C (corresponding to "other end side large diameter portion" in the claims). In addition, a thread portion 11N is formed on an outer side surface of the upper end side large diameter portion 11C, and a thread portion 19N of a lid body 19 is screwed onto the thread portion 11N, so that an upper end opening of the support sleeve 12 is closed by the lid body 19. On an inner upper surface of the lid body 19, a packing 19G is disposed in an overlapping manner, and an upper end of the upper end side large diameter portion 11C abuts on the packing 19G.

A lower end portion of the support sleeve 12 is covered with an elastic covering member 24, and a buried flange 12F is formed in a portion of the support sleeve 12 covered with the elastic covering member 24. The buried flange 12F has an upper surface 12F1 protruding laterally from a position near a lower end of the outer surface of the support sleeve 12 and perpendicular to an axial direction of the support sleeve 12, a side surface 12F2 having a uniform outer diameter, and a tapered surface 12F3 reducing in diameter downward.

The elastic covering member 24 is made of, for example, vulcanized rubber together with a seal protrusion 21 described later, and is fixed to the support sleeve 12 by being molded around the lower end portion of the support sleeve 12. The elastic covering member 24 has a uniform outer diameter, extends in the vertical direction, and has a lower end outer edge portion chamfered. In addition, an upper surface of the elastic covering member 24 is disposed to be flush with the upper surface 12F1 of the buried flange 12F, while a lower surface is positioned below a lower end surface of the support sleeve 12 and covers a lower surface of the support sleeve 12. Furthermore, an opening corresponding to a lower end opening of the support sleeve 12 is formed at the center of the lower surface of the elastic covering member 24.

The entire seal protrusion 21 has, for example, a bowl shape, and includes a flexible flange 22 protruding laterally from an upper end portion of an outer surface of the elastic covering member 24 and a cylindrical portion 23 standing upward from a distal end portion of the flexible flange 22, and a portion between the flexible flange 22 and the cylindrical portion 23 is curved. A thickness of the seal protrusion 21 is uniform from a proximal end of the flexible flange 22 to a position before the curved portion between the flexible flange 22 and the cylindrical portion 23, and gradually increases from the start position of the curved portion to the distal end of the cylindrical portion 23. An upper surface of the flexible flange 22 and the upper surface 12F1 of the buried flange 12F are flush with each other.

The entire dividing wall mounting device 10A except for the seal protrusion 21 is the main device body 11 described above. A portion of the main device body 11 whose outer surface is covered with the elastic covering member 24 forms a lower end side large diameter portion 11A (corresponding to "one end side large diameter portion" in the claims), and a portion between the lower end side large diameter portion 11A and the above-described upper end side large diameter portion 11C is a small diameter portion 11B having an outer diameter smaller than those of the lower end side large diameter portion 11A and the upper end side large diameter portion 11C. Thus, the dividing wall mounting device 10A of the present embodiment has a shape in which the seal protrusion 21 protrudes laterally from the vicinity of a stepped portion between the lower end side large diameter portion 11A and the small diameter portion 11B of the main device body 11.

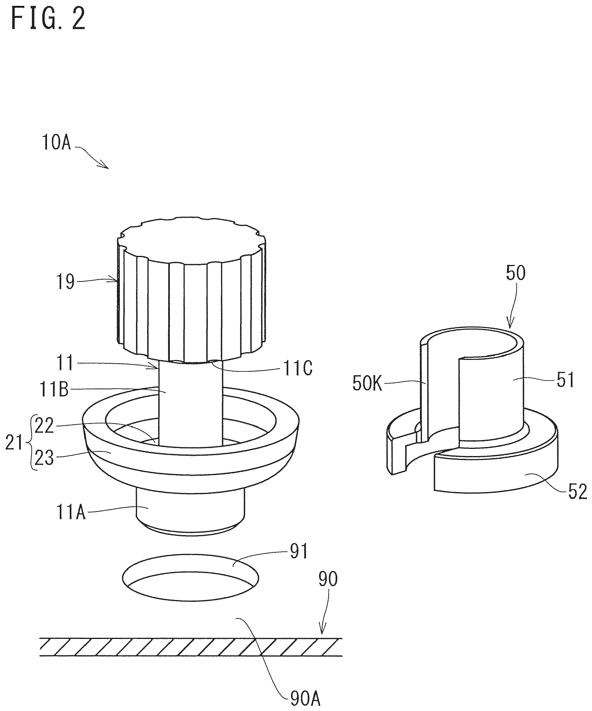

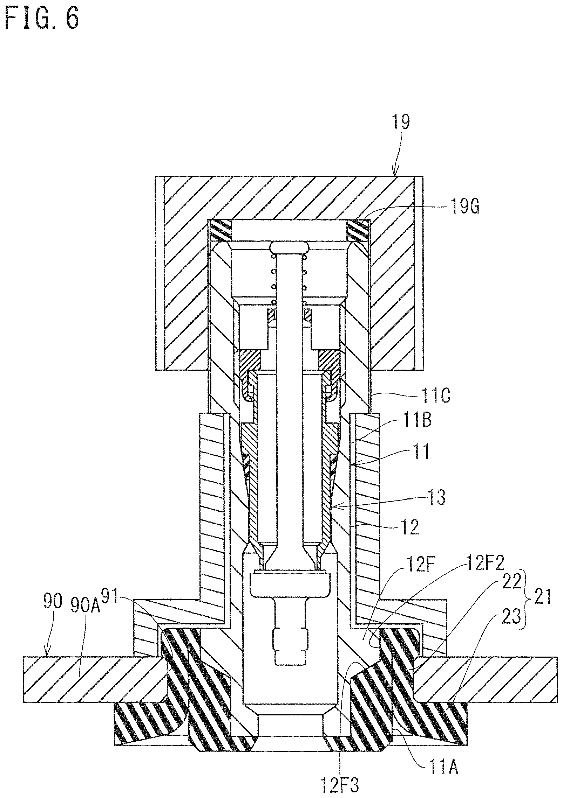

As illustrated in Fig. 6, the dividing wall mounting device 10A includes a stopper 50 that can be attached to the small diameter portion 11B of the main device body 11. As illustrated in Fig. 2, the stopper 50 has a structure in which one place in a circumferential direction of a cylindrical body whose lower end portion is enlarged in diameter in a stepped manner is entirely cut out with a constant width in the vertical direction. In addition, the enlarged lower end portion of the stopper 50 forms a cap portion 52 in the claims, and an inner diameter thereof is slightly larger than an inner diameter of the through-hole 91 to which the dividing wall mounting device 10A is attached. Furthermore, an inner diameter of a small-diameter cylindrical portion 51 of the stopper 50 on the upper side of the cap portion 52 is larger than the outer diameter of the small diameter portion 11B and smaller than the outer diameter of the upper end side large diameter portion 11C of the main device body 11. Furthermore, the entire height of the stopper 50 is slightly longer than the entire length of the small diameter portion 11B of the main device body 11. A method of using the stopper 50 will be described later.

The configuration of the dividing wall mounting device 10A of the present embodiment has been described above. Next, functions and effects of the dividing wall mounting device 10A will be described.

The dividing wall mounting device 10A is attached to the through-hole 91 of a rim 90A of a wheel 90. Note that the wheel 90 and a tire form a container that stores a fluid (specifically, compressed air), and the rim 90A of the wheel 90 forms a "dividing wall" in the claims that separates an inner region in the tire from the outside.

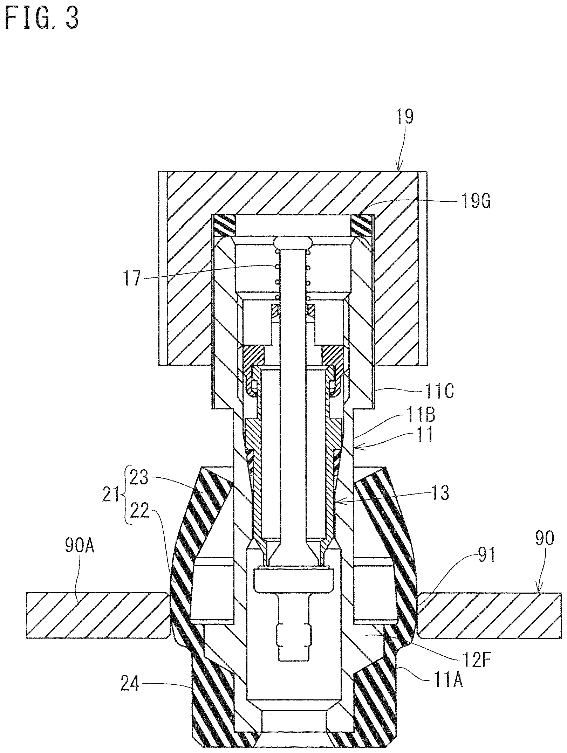

When the dividing wall mounting device 10A is attached to the wheel 90, as illustrated in Fig. 1, the dividing wall mounting device 10A is disposed outside the tire in a state where the stopper 50 is removed, and is inserted into the through-hole 91 of the rim 90A from the lower end side large diameter portion 11A side. Then, as illustrated in Fig. 3, the flexible flange is brought into a first state where the flexible flange 22 collapses towards the small diameter portion 11B side of the main device body 11 and narrows due to contact with an opening edge of the through-hole 91, the cylindrical portion 23 is brought into a state where the cylindrical portion 23 extends upward from an upper end portion of the flexible flange 22 and narrows, and they pass through the through-hole 91.

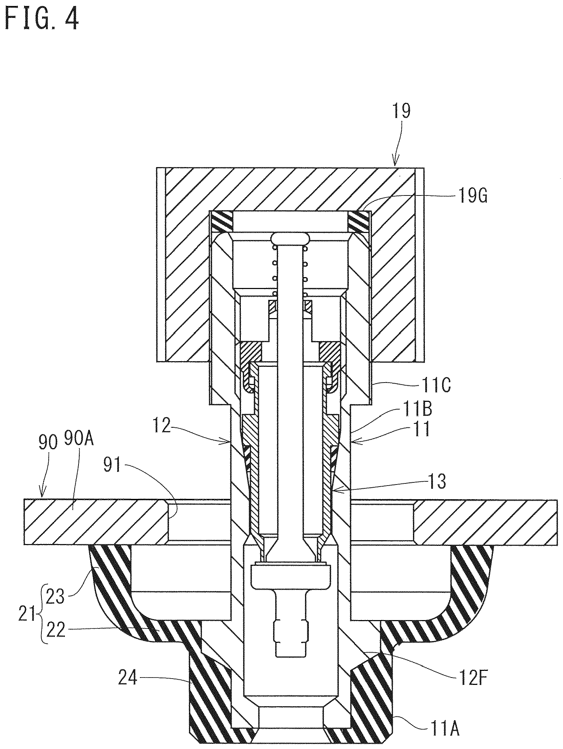

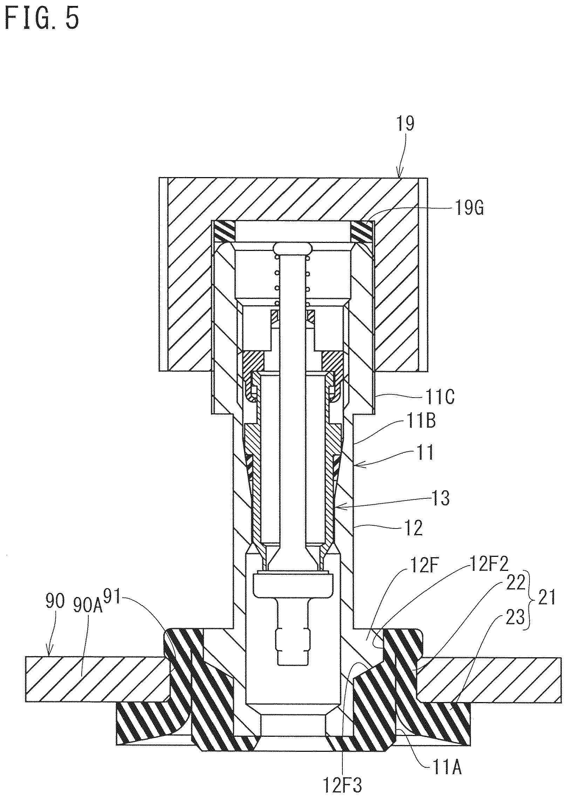

As illustrated in Fig. 4, the flexible flange 22 and the cylindrical portion 23 are restored to the original state inside the tire after passing through the through-hole 91. From there, the dividing wall mounting device 10A is pulled back in the direction opposite to the insertion direction. Then, as illustrated in Fig. 5, the flexible flange 22 is brought into a second state where the flexible flange 22 collapses towards the lower end side large diameter portion 11A side of the main device body 11 and narrows due to contact with the opening edge of the through-hole 91, and the cylindrical portion 23 is brought into a state where the cylindrical portion 23 protrudes laterally from a lower end of the flexible flange 22.

Here, since the lower end side large diameter portion 11A of the main device body 11 positioned inside the flexible flange 22 in the second state is larger than the small diameter portion 11B of the main device body 11 positioned inside the flexible flange 22 in the first state, the outer diameter of the flexible flange 22 is larger in the second state than in the first state. Then, the flexible flange 22 in the second state is press-fitted into the through-hole 91.

Specifically, first, portions of the flexible flange 22 and the elastic covering member 24 overlapping the outside of the side surface 12F2 of the buried flange 12F enter the through-hole 91. Since the portions have the smallest compressive deformation allowance obtained by combining the flexible flange 22 and the elastic covering member 24, the portions are press-fitted with a high press-fitting resistance. Then, as illustrated in Fig. 5, when most of the side surface 12F2 of the buried flange 12F passes through the through-hole 91 and the press-fitting resistance slightly decreases, the cylindrical portion 23 comes into contact with the opening edge of the through-hole 91, and is not press-fitted into the through-hole 91 any further.

As a result, the dividing wall mounting device 10A is fixed to the through-hole 91 in a state of being difficult to move from the through-hole 91 to the outside or the inside of the rim 90A. In order to strengthen the fixation, the stopper 50 is attached to the dividing wall mounting device 10A from the side. For the attachment, an opening edge of a side surface opening 50K (see Fig. 2) of the stopper 50 is pressed against the small diameter portion 11B of the dividing wall mounting device 10A from the side. Then, the stopper 50 is elastically deformed such that the side surface opening 50K opens laterally, and the stopper 50 elastically returns when the small diameter portion 11B is taken inside the stopper 50. Then, an upper surface of the stopper 50 is adjacent to or in contact with a step surface between the upper end side large diameter portion 11C and the small diameter portion 11B of the main device body 11, and a lower surface of the stopper 50 is adjacent to or in contact with the opening edge of the through-hole 91 on an outer surface of the rim 90A, thereby preventing the dividing wall mounting device 10A from being pushed into the rim 90A from the through-hole 91.

As described above, the dividing wall mounting device 10A of the present embodiment can be attached to the through-hole 91 from the outside of the rim 90A, and is more convenient than a conventional one. In addition, since the flexible flange 22 press-fitted into the through-hole 91 protrudes laterally from the vicinity of the stepped portion between the lower end side large diameter portion 11A and the small diameter portion 11B of the main device body 11, it is possible to increase the difference between the outer diameter of the flexible flange 22 in the first state where the flexible flange 22 collapses towards the small diameter portion 11B side and the outer diameter of the flexible flange 22 in the second state where the flexible flange 22 collapses towards the lower end side large diameter portion 11A side, so that the flexible flange 22 can easily pass through the through-hole 91 when the flexible flange 22 is set in the first state, and the press-fitting strength into the through-hole 91 can be increased when the flexible flange 22 is set in the second state.

In addition, since the flexible flange 22 made of an elastomer and the elastic covering member 24 made of an elastomer forming the lower end side large diameter portion 11A are overlapped and press-fitted into the through-hole 91, both the flexible flange 22 and the elastic covering member 24 can be compressed and deformed at the time of press-fitting, and the press-fitting deformation allowance can be easily secured.

Furthermore, since the buried flange 12F of the support sleeve 12 is buried in the elastic covering member 24, the strength and resistance of the press-fitting can be easily changed to a desired level by changing the size and shape of the buried flange 12F. In addition, the dividing wall mounting device 10A is fixed to the rim 90A even in a state where the stopper 50 is not attached, but the fixing is strengthened by attaching the stopper 50. Moreover, since the stopper 50 can be attached to and detached from the main device body 11 from the side, attachment and detachment work can be easily performed. In addition, since a portion of the flexible flange 22 press-fitted into the through-hole 91 and protruding from the rim 90A is covered and protected by the cap portion 52 of the stopper 50, reliability is also high.

In order to remove the dividing wall mounting device 10A attached to the rim 90A, it suffices that the stopper 50 is detached from the dividing wall mounting device 10A, and the flexible flange 22 and the elastic covering member 24 protruding outward from the through-hole 91 are cut with, for example, a nipper or the like to pull out the dividing wall mounting device 10A from the through-hole 91. In addition, in the above description, the dividing wall mounting device 10A is attached from the outside of the rim 90A. However, if the stopper 50 is not used, the dividing wall mounting device 10A can be attached from the inside of the rim 90A, and may be used in such a manner as necessary.

### [Second embodiment]

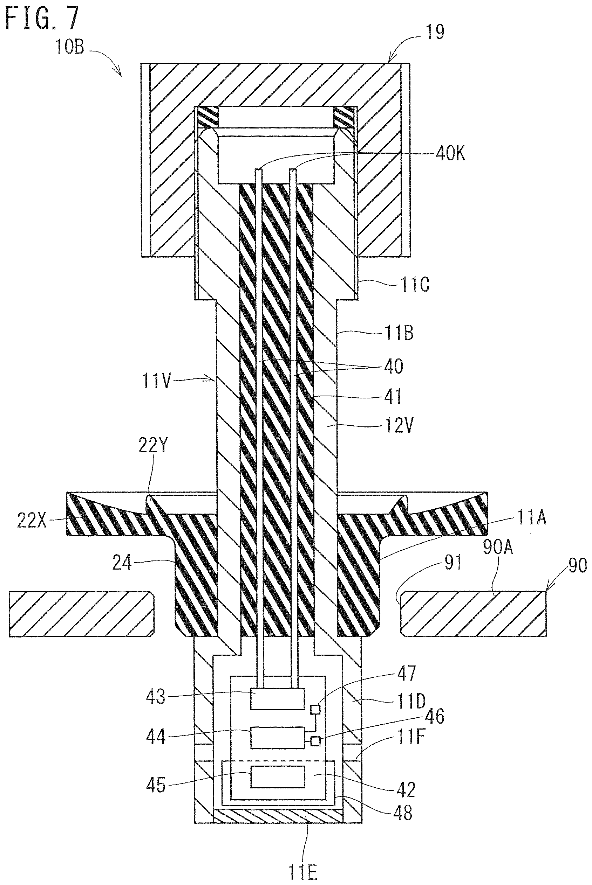

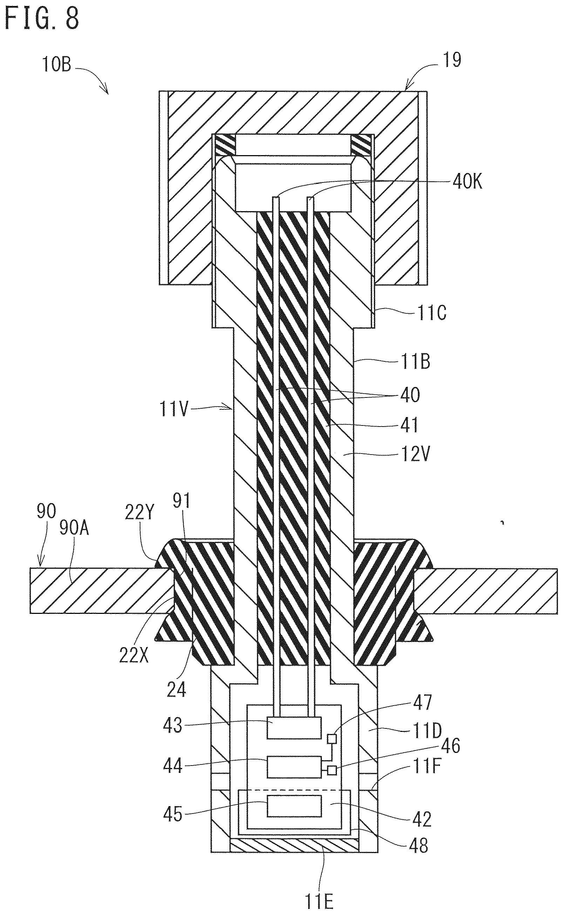

A dividing wall mounting device 10B of the present embodiment is illustrated in Figs. 7 and 8. The dividing wall mounting device 10B has a board housing chamber 11D at a lower end portion of a main device body 11V, and accommodates a circuit board 42 therein. Specifically, the board housing chamber 11D is formed by enlarging the diameter of a portion of a support sleeve 12V extended downward from the elastic covering member 24, and a lower surface thereof is closed by a lid plate 11E. Note that a vent 11F is formed in the board housing chamber 11D.

A power supply circuit 43, a control circuit 44, a wireless circuit 45, a pressure sensor 46, an acceleration sensor 47, and the like are mounted on the circuit board 42. Then, the control circuit 44, the wireless circuit 45, and the like receive power through the power supply circuit 43 from a secondary battery 48 housed in the board housing chamber 11D together with the circuit board 42, and wirelessly transmit detection results of the pressure sensor 46 and the acceleration sensor 47.

In addition, a pair of bus bars 40 for charging the secondary battery 48 is connected to the power supply circuit 43. The pair of bus bars 40 extends from the board housing chamber 11D to an upper end portion of the support sleeve 12V. Furthermore, the pair of bus bars 40 penetrates a seal member 41 filled in an area excluding the upper end portion and the board housing chamber 11D in the support sleeve 12V, and upper end portions of the bus bars 40 protrude from an upper surface of the seal member 41 as a pair of charging electrodes 40K.

A flexible flange 22X of the present embodiment has a disk shape without the cylindrical portion 23 of the first embodiment, and the thickness thereof gradually increases towards the distal end. Furthermore, for example, an annular ridge 22Y having a triangular cross section protrudes from a proximal end portion of an upper surface of the flexible flange 22X. The lower surface of the elastic covering member 24 overlaps an upper surface of the board housing chamber 11D, and the buried flange 12F of the first embodiment is not buried in the elastic covering member 24.

The configuration of the dividing wall mounting device 10B of the present embodiment has been described above. Similarly to the dividing wall mounting device 10A of the first embodiment, the dividing wall mounting device 10B is inserted from the outside into the through-hole 91 of the rim 90A of the wheel 90 and then pulled back, so that the flexible flange 22X is press-fitted into the through-hole 91 in a state of overlapping the outside of the elastic covering member 24 as illustrated in Fig. 8. Then, the annular ridge 22Y is locked to the opening edge of the through-hole 91 on the outer surface of the rim 90A, whereby the dividing wall mounting device 10B is prevented from being pushed back to the inner side of the rim 90A. Furthermore, after the dividing wall mounting device 10B is attached to the wheel 90, the above-described detection results are wirelessly transmitted, whereby the pressure in the tire and the behavior of the wheel can be monitored.

### [Other embodiments]

(1) The stopper 50 of the first embodiment has a structure to be attached to the main device body 11 from the side, but for example, the upper end side large diameter portion 11C of the main device body 11 may have the same outer diameter as the small diameter portion 11B, the thread portion 11N may be formed up to a lower end portion of the small diameter portion 11B, and a stopper having a nut structure instead of the stopper 50 may be screwed and attached thereto.
(2) Instead of the buried flange 12F, a plurality of protrusions may be dispersedly arranged in a circumferential surface direction of a lower end portion of the main device body 11.
(3) Portions that are not press-fitted into the through-hole 91, such as the cylindrical portion 23 and the annular ridge 22Y, may be provided so as to be scattered in a circumferential direction without being continuous in the circumferential direction.
(4) Although the flexible flange 22 is integrally formed with the elastic covering member 24 fixed to the main device body 11 at the time of molding the vulcanized rubber, the flexible flange 22 or the elastic covering member 24 may be fixed to the main device body 11 with an adhesive, or the flexible flange 22 or the elastic covering member 24 may be fixed to the main device body 11 with a structure other than these.
(5) The support sleeve 12 is made of metal, but may be made of resin. The flexible flange 22, the elastic covering member 24, and the like are made of vulcanized rubber, but need not be made of vulcanized rubber as long as they are made of an elastomer.
(6) In the above embodiments, the examples of the dividing wall mounting devices 10A and 10B attached to the wheel 90 have been described, but the structures of the present disclosure may be applied to a dividing wall mounting device attached to a pipe through which a fluid flows, a tank that stores a fluid, and the like.

Although specific examples of the technology included in the claims are disclosed in the present specification and drawings, the technology described in the claims is not limited to these specific examples, and includes those obtained by variously modifying and changing the specific examples, and also includes those obtained by singly extracting a part from the specific examples.

### DESCRIPTION OF THE REFERENCE NUMERAL

10A, 10B dividing wall mounting device
11, 11V main device body
11A lower end side large diameter portion (one end side large diameter portion)
11B small diameter portion
11C upper end side large diameter portion (other end side large diameter portion)
12, 12V support sleeve
12F buried flange
22, 22X flexible flange
22X flexible flange
23 cylindrical portion
24 elastic covering member
50 stopper
52 cap portion
90A rim (dividing wall)
91 through-hole

## Claims

1. A dividing wall mounting device configured to be attached to a through-hole of a dividing wall that separates, from an outside, an inner region in which a fluid is stored or flows, the dividing wall mounting device comprising:
a main device body extending along a central axis of the through-hole; and
a flexible flange made of an elastomer and protruding laterally from an intermediate position in an axial direction of the main device body, and when the dividing wall mounting device is inserted into the through-hole from one end side in the axial direction, the flexible flange passing through the through-hole in a first state where the flexible flange collapses towards an other end side in the axial direction and narrows due to contact with an opening edge of the through-hole, and when the dividing wall mounting device is pulled back in a direction opposite to the insertion, the flexible flange being press-fitted into the through-hole in a second state where the flexible flange collapses towards the one end side in the axial direction and narrows due to contact with the opening edge of the through-hole, and has an outer diameter larger than an outer diameter in the first state.

2. The dividing wall mounting device according to claim 1, wherein
the main device body includes a one end side large diameter portion obtained by enlarging an outer diameter on the one end side of an intermediate position in the axial direction of the main device body, and a small diameter portion provided on the other end side of the one end side large diameter portion and having an outer diameter smaller than an outer diameter of the one end side large diameter portion, and
the flexible flange protrudes laterally from a stepped portion between the one end side large diameter portion and the small diameter portion or a vicinity of the stepped portion.

3. The dividing wall mounting device according to claim 1 or 2, further comprising a stopper configured to be locked or engaged on the other end side of the flexible flange of the main device body in a state where the flexible flange is press-fitted into the through-hole, and configured to restrict movement of the dividing wall mounting device in a direction of the insertion.

4. The dividing wall mounting device according to claim 3, wherein
the main device body includes an other end side large diameter portion obtained by enlarging an outer diameter on the other end side of the small diameter portion to be larger than the outer diameter of the small diameter portion, and
the stopper is formed by forming a vertical split slit in a cylindrical body, and is attached from a side between the other end side large diameter portion and the dividing wall in the state where the flexible flange is press-fitted into the through-hole.

5. The dividing wall mounting device according to claim 3 or 4, wherein the stopper includes a cap portion that covers a portion of the flexible flange press-fitted into the through-hole, the portion protruding from the dividing wall.

6. The dividing wall mounting device according to any one of claims 1 to 6, wherein
the main device body includes:
a support sleeve made of metal or resin;
an elastic covering member made of an elastomer that covers the one end side of the support sleeve and forms the one end side large diameter portion side; and
a buried flange integrally formed with the support sleeve and buried in the elastic covering member, and
the flexible flange is integrally formed with the elastic covering member.

7. The dividing wall mounting device according to any one of claims 1 to 6, further comprising a cylindrical portion that protrudes from a distal end of the flexible flange to the other end side in the axial direction.
